# EUROPÄISCHE PATENTANMELDUNG

(11) **EP 1 179 938 A1**
(43) Veröffentlichungstag der Anmeldung: **13.02.2002**
(21) Anmeldenummer: 00117012.5
(22) Anmeldetag: 08.08.2000
(51) Int. Cl.: H04L 29/06

(54) **Verfahren und Vorrichtung zur zentralen Koordinierung der Datenübertragung zwischen einem sendenden und einem empfangenden Netzelement**

(71) Anmelder: SIEMENS AKTIENGESELLSCHAFT, 80333 München (DE)
(72) Erfinder: Böhmer, Bernhard, Dr., 14055 Berlin (DE); Kastelewicz, Georg, 10179 Berlin (DE); Kim, Peter, Dr., 12623 Berlin (DE); Vogel, Arnim, 10437 Berlin (DE)

(57) **Zusammenfassung**

Endgeräte und Applikationen, die miteinander kommunizieren wollen, müssen sich auf ein gemeinsames Protokoll sowie Datenaustauschformat einigen. Umsetzungsfunktionen werden jetzt als separate Dienstleistung für unterschiedlichste Formate und Protokolle im Netz angeboten. Applikationen müssen nicht mehr jeden Standard unterstützen, sondern können bei Bedarf den entsprechenden Konvertierungsdienst nutzen. Es wird eine zentrale Instanz eingeführt. Bei dieser Instanz melden sich alle verfügbaren Umsetzer an und hinterlegen Informationen darüber, welche Protokolle/Formate sie ineinander umsetzen können. Die zentrale Instanz verwaltet diese Informationen und macht sie für Applikationen und Endgeräte zugänglich. Der Informationsaustauch könnte hierbei auf einem einfachen Frage - Anwort Mechanismus basieren.

## Beschreibung

### Fachgebiet der Erfindung

In den letzten Jahren ist das Interesse kommerzieller Informationsanbieter am Internet sprunghaft gestiegen. Begründet ist diese Entwicklung vor allem in der Flexibilität des Informationsaustausches und den vergleichbar geringen Kosten. So ist es zum Beispiel im Internet sehr einfach möglich, ohne Zwischenschaltung einer zentralen Instanz schnell und billig Informationen weltweit verfügbar zu machen, oder völlig neue Dienste anzubieten. Dies basiert auf der verteilten Kommunikationsarchitektur des Internets. Einheitliche Richtlinien sind hierbei schwer durchzusetzen. In den Bereichen der Datenkodierung, Datenübertragung, und Datenpräsentation führte diese Freiheit zu einer Vielzahl von parallel entwickelten Industrie- oder Quasi-Standards. Dies wiederum resultierte in Produkten, die verschiedene Formate und Verfahren zum Austausch bzw. bei der Darstellung von Daten verwenden. Beispiele hierfür sind Anwendungen auf Notebooks (PCs), Palmtops oder Mobiltelefonen, die miteinander über das Internet kommunizieren. Vorangetrieben wird dieser Trend vor allem durch schnelle Innovationszyklen, die Produktvielfalt, eine stärkere Spezialisierung, sowie der im Kommunikationsbereich häufig benötigten Abwärtskompatibilität.

### Stand der Technik

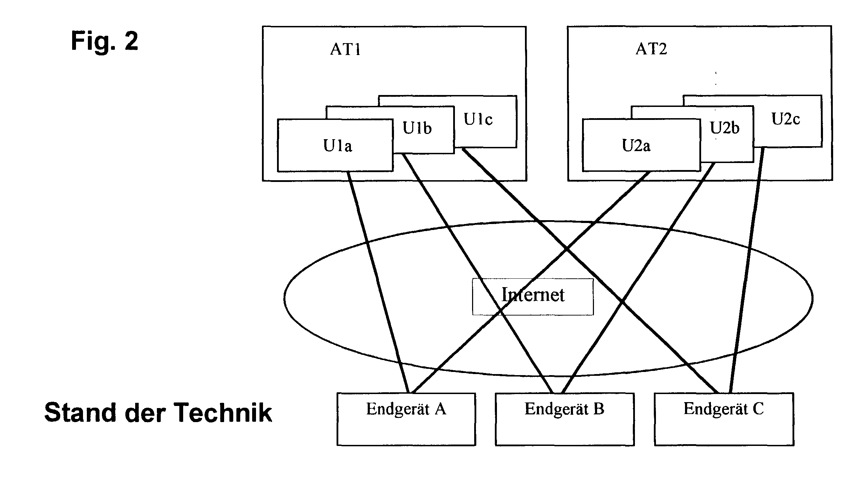

Derzeitig ist jeder Applikations-/ Endgeräteanbieter gezwungen, eine Vielzahl von Standards oder relevanten Quasi-Standards zu unterstützen um Kompatibilität mit den Produkten anderer Hersteller zu erzielen. Kompatibilität beinhaltet hier die Kommunikationsprotokolle, die Formate der ausgetauschten Daten, sowie die Darstellung derselben im Endgerät. Häufig werden diese dann am Beginn der Kommunikation ausgehandelt. Die Architektur eines solchen Systems ist in der Figur 2 dargestellt. Beschrieben sind zwei Applikations Typen AT1, AT2, und mehrere Endgeräte A, B, C. Die Verbindungslinien innerhalb der Abbildung zeigen den Datenfluß an. Die Umsetzer U1a, bis U2c sind für die Formatumwandlung entsprechend der Fähigkeiten des jeweiligen Endgerätes und der Applikation verantwortlich. Charakteristisch für diese Architektur ist dabei, daß jede Applikation ihren eigenen Umsetzer besitzt. Häufig ist dieser sogar in die Applikation integriert.

Hieraus erwächst das kombinatorische Problem, dass eine Vielzahl von Applikationen in diesen Endgeräten eine immer größere Anzahl von Standards zur Datenübertragung, -kodierung und -präsentation unterstützen müssen. Dies ist sehr aufwändig für die Hersteller.
Deshalb werden weder eine Applikation noch ein Endgerät aus wirtschaftlichen sowie technischen Gründen alle existierenden Standards unterstützen können. Jeder Applikationshersteller beschränkt sich auf die Standards, die ihm den größten Umsatz versprechen. Nischenprodukte oder ältere Geräte bleiben damit von der Nutzung neuer Applikationen ausgeschlossen.

Es ist daher Aufgabe der Erfindung, eine Lösung für die oben genannten Probleme anzugeben. Es ist weiterhin Aufgabe der Erfindung, mit einer minimalen Anzahl von Umsetzern eine möglichst große Anzahl von möglichen Applikationen einerseits und Endgeräte-Typen andererseits zu unterstützen.

### Darstellung der Erfindung

Diese Aufgabe wird gelöst durch ein Verfahren gemäß Patentanspruch 1 und eine Vorrichtung gemäß Patentanspruch ?.

Umsetzungsfunktionen (im folgenden als Media Converter bezeichnet) werden erfindungsgemäß als separate Dienstleistung für unterschiedlichste Formate und Protokolle im Netz angeboten. Applikationen müssen dann nicht mehr jeden Standard unterstützen, sondern können bei Bedarf den entsprechenden Konvertierungsdienst nutzen.
Dies verkürzt die Entwicklungszeiten und führt zu einer besseren Interoperabilität mit und zwischen Endgeräten verschiedener Hersteller, da üblicherweise nicht jeder Hersteller jedes Format wirklich implementiert.

Endgeräte und Applikationen, die miteinander kommunizieren wollen, müssen sich auf ein gemeinsames Protokoll sowie Datenaustauschformat einigen. Bisher genügten dazu die Informationen, die in den Endgeräten abgelegt waren: Jedes Endgerät hat das Wissen darüber, welche Protokolle und Datenaustauschformate es unterstützt; die ausgewählten Protokolle /Datenaustauschformate mußten im Rahmen dieser Auswahlmöglichkeiten liegen. Das Aushandeln eines gemeinsamen Protokolls bzw. Datenaustauschformates erfolgte direkt zwischen dem jeweiligen Endgerät und der Applikation.

Mit der Bereitstellung von Umsetzern im Netz ist bei der Aushandlung des Protokolls und Datenaustauschformats eine neue Dimension zu berücksichtigen - die Menge aller verfügbaren Umsetzer und ihre Fähigkeiten zur Umsetzung eines Protokolls oder Formates in ein anderes. Dieses Wissen ist in den Endgeräten/Applikationen nicht vorhanden.

Es wird daher für das erfindungsgemäße Vorgehen eine zentrale Instanz eingeführt. Bei dieser Instanz melden sich alle verfügbaren Umsetzer an und hinterlegen Informationen darüber, welche Protokolle/Formate sie ineinander umsetzen können. Die zentrale Instanz verwaltet diese Informationen und macht sie für Applikationen und Endgeräte zugänglich. Der Informationsaustauch könnte hierbei auf einem einfachen Frage - Anwort Mechanismus basieren, dem Fachmann sind hierfür viele Realisierungsmöglichkeiten bekannt.

Vorteilhafte Ausgestaltungen und Weiterbildungen sind in den Unteransprüchen angegeben.

Für die Aushandlung eines gemeinsamen Datenaustauschformates zwischen Endgeräten sind verschiedene Szenarien denkbar. Diese werden im folgenden erläutert:
Eine Applikation/Endgerät tritt in Kontakt mit einem anderen Endgerät/Applikation. Nach dem Empfang der Dienstanforderung prüfen Endgerät bzw. Applikation zunächst, ob die eigenen Fähigkeiten mit denen des Partners kompatibel sind oder ob ein Umsetzerdienst zum Informationsaustausch benötigt wird. Im letzteren Fall wendet sich ein Endgerät anschließend an die zentrale Instanz und bittet um Vermittlung eines geeigneten Umsetzers.

Die zentrale Instanz
- wählt nach vorgegebenen Kriterien einen geeigneten Umsetzerdienst aus und informiert die Endgerät(e)/ Applikation(en) und den Umsetzer über die Austauschformate. Die Dienstkommunikation erfolgt dann direkt, ohne Mitarbeit der zentralen Instanz, oder
- informiert das anfordernde Endgerät/Applikation über infragekommende Umsetzerdienste. Das Endgerät/ die Applikation wählt nach eigenen Kriterien einen geeigneten Umsetzerdienst aus und informiert das Partner-Endgerät/ die Partner-Applikation und den Umsetzer über die Austauschformate.

Die zentrale Instanz ist jedoch kein universeller Dienstevermittler, sondern ein spezialisierter Vermittler von Umsetzerdiensten, der eigenständig in der Lage ist, aufgrund von Kriterien, aus einer Menge von Umsetzerdiensten einen geeigneten Umsetzerdienst auszuwählen. Die Infrastruktur - zentrale Instanz, Mediakonverter, Endgeräte und Applikationen - können sich beispielsweise mit der JINI-Technologie aufbauen lassen.

Die Vorteile einer zentralen Umsetzerverwaltung sind:
- Hersteller von Anwendungen/Endgeräten müssen nicht mehr eine Vielzahl von Standards zur Datenübertragung, -kodierung und -präsentation unterstützen.
- Hersteller von Umsetzern und besagter zentraler Instanzen können - nun, da Umsetzer nicht mehr ausschließlich für eine Anwendung erstellt werden - sich auch darauf konzentrieren, den großen Bereich der bisher aus wirtschaftlichen/technischen Gründen (Marktbreite/Machbarkeit) vernachlässigten Endgeräte zu adressieren.

Durch die Verwaltung von Umsetzern in einer zentralen Instanz des Netzes (bzw. Vermittlung durch eine zentrale Instanz)werden Umsetzer allen Applikationen/ Endgeräten zugänglich. Applikationen und Umsetzer lassen sich dadurch wirtschaftlicher herstellen und können eine größere Breite in Bezug auf unterstützte Protokolle und Datenaustauschformate anbieten.

### Kurzbeschreibung der Zeichungen

Im folgenden wird die Erfindung anhand von Ausführungsbeispielen erläutert. Dabei zeigen
- Figur 1: eine Systemarchitektur mit einer zentralen Umsetzerverwaltung,
- Figur 2: die Architektur eines bisherigen Systems (Stand der Technik),
- Figur 3: ein erstes Beispiel für den Nachrichtenfluß zwischen Applikation, Endgerät und zentraler Instanz,
- Figur 4: ein zweites Beispiel für den Nachrichtenfluß zwischen Applikation, Endgerät und zentraler Instanz, und
- Figur 5: ein konkretes Ausführungsbeispiel.

### Beschreibung der bevorzugten Ausgestaltungsformen

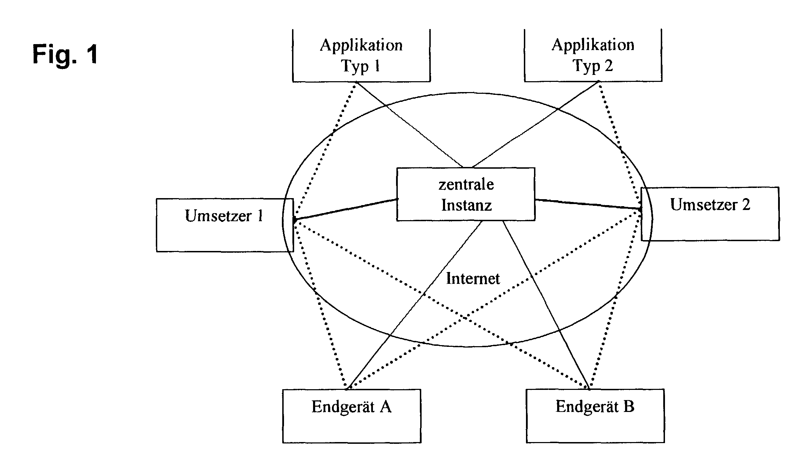

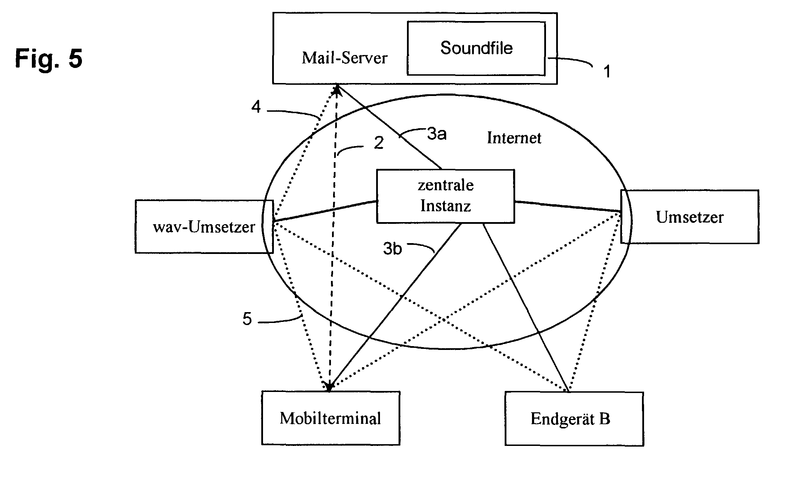

In Figur 1 wird dargestellt, wie jeder Umsetzer 1, 2 durch mehrere Applikationen Typ1, Typ2, genutzt werden kann. Die dicken Linien illustrieren die Registrierungsbeziehungen zur zentralen Instanz. Die gepunkteten Linien zeigen den Datenfluß zwischen Applikationen und Endgeräten A, B, der jeweils einen Umsetzer einbezieht. Im folgenden wird ein praktischer Anwendungsfall anhand der allgemeinen Systemarchitektur und der Figur 5 erläutert.

Im Internet wird der Dienst "E-mail" angeboten, der es gestattet, Dokumente auszutauschen.
Im betrachteten Falle müssen eine Applikation Typ1 (ein Mail-Server) und ein Endgerät A (zum Lesen und Schreiben der E-Mail) miteinander kommunizieren.
Die E-Mail liegt auf dem Mailserver beispielsweise als MIME-kodierter (Multipurpose Internet Mail Extensions) ASCII-Text (American Standard Code for Information Interchange) vor, 1. Bestandteil der E-Mail (Attachement) ist ein Soundfile. Das Endgerät kann ein Mobilterminal mit Unterstützung für das Datenaustauschformat WML1.1 (Wireless Markup Language) nach Protokollstandard WAP 1.1 (Wireless Application Protocol) sein.
Das Endgerät meldet sich beim Mailserver an und erfährt, daß eine neue Mail eingetroffen ist, 2. Es beschließt, die Mail von dem Mailserver herunterzuladen.
Der Mailserver teilt dem Endgerät mit, daß es hierzu in der Lage sein muß, Soundfiles (nach wav-Standard) wiederzugeben, sowie zur Übertragung POP3 (Post office protocol) oder FTP (file transfer protocol) zu unterstützen. Dazu ist das Endgerät nicht in der Lage. Server und Endgerät finden kein gemeinsames Format, in dem die Sounddatei aus der E-Mail vom Server an das Endgerät übertragen und dann von diesem wiedergegeben werden könnte.
Das Endgerät, 3b (oder der Mail-Server, 3a) wendet sich nun an besagte zentrale Instanz mit der Bitte um Vermittlung. Der zentralen Instanz werden die Fähigkeiten von Endgerät und Mail-Server mitgeteilt, u.a. daß das Endgerät ein Mobiltelefon ist, also Telefonie unterstützt.
Die zentrale Instanz wählt nun einen Umsetzer aus, der in der Lage ist, Soundfiles per FTP zu empfangen, Telefonverbindungen aufzubauen, sowie besagte Soundfiles über den Sprachkanal einer solchen Verbindung wiederzugeben.

Der Mail-Server überträgt das Soundfile per FTP an den Umsetzer, 4, der eine Telefonverbindung zu besagtem Endgerät herstellt und die Sounddatei über diese Verbindung wiedergibt, 5.

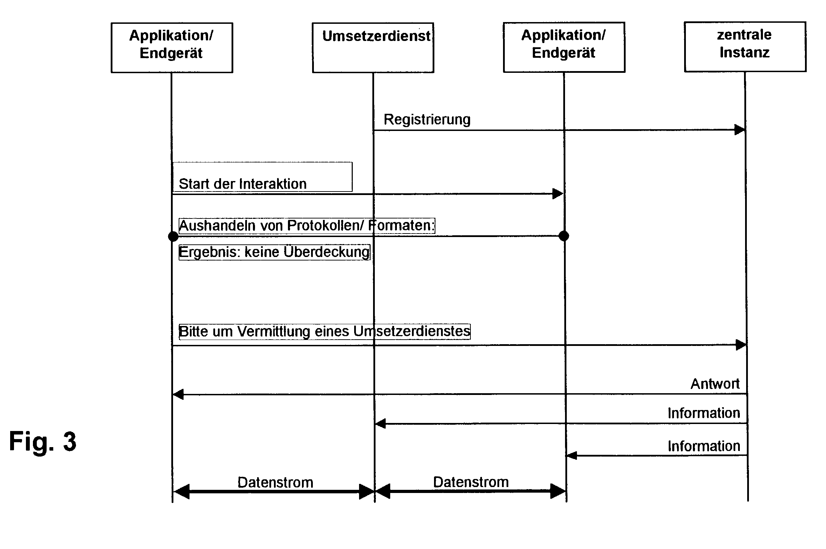

Figur 3 zeigt ein erstes Beispiel für den Nachrichtenfluß zwischen Applikation, Endgerät und zentraler Instanz.
Ein Umsetzdienst registriert sich bei der zentralen Instanz. Zwischen zwei Endgeraten oder Applikationen sollen nun Daten beliebigen Formates ausgetauscht werden. Zunächst wird durch eine direkte Kommunikation zwischen den Endgeräten/Applikationen versucht, diese Daten auszutauschen. Es wird jedoch festgestellt, dass die Übertragungsformate nicht kompatibel sind. Daher wird die zentrale Instanz um Vermittlung eines geeigneten Übersetzerdienstes gebeten. Die zentrale Instanz wählt anhand der bei ihr registrierten Übersetzungsdienste einen geeigneten aus. Dann informiert die zentrale Instanz alle beteiligten Einheiten. Die sendende Applikation bzw. Endgerät übermittelt die Daten an den Umsetzdienst, der diese umsetzt und danach an die empfangende Applikation weitersendet.

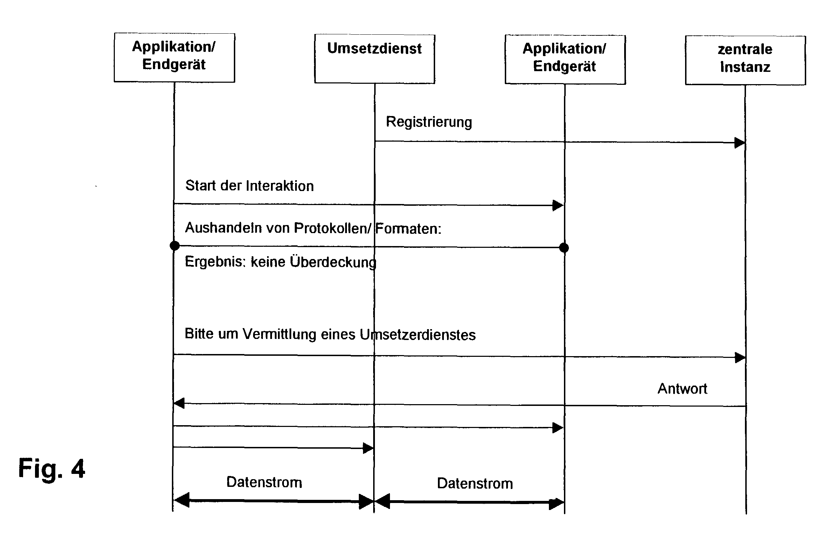

Figur 4 zeigt ein zweites Beispiel für den Nachrichtenfluß zwischen Applikation, Endgerät und zentraler Instanz. Das Vorgehen entspricht dem in Figur 3 dargestellten Vorgehen. Die zentrale Instanz informiert jedoch nur die anfragende Einheit, diese wiederum informiert die restlichen betroffenen Einheiten: den Umsetzdienst und die empfangende Applikation oder Endgerät. Die sendende Applikation bzw. Endgerät übermittelt die Daten an den Umsetzdienst, der diese umsetzt und danach an die empfangende Applikation weitersendet.

## Patentansprüche

1. Verfahren zur zentralen Koordinierung der Datenübertragung zwischen einem sendenden Netzelement (Applikation Typ 1,2) und einem empfangenden Netzelement (Endgerät A,B), bei dem
- sendendes und empfangendes Netzelement bezüglich des Daten- oder Übertragungsformates nicht kompatibel sind,
- und deshalb eine Umsetzung der Daten durchgeführt werden muß,
- und von dem sendenden oder empfangenden Netzelement eine Anfrage an einen Umsetzer-Koordinator (zentrale Instanz) gestellt wird, nach einem geeigneten Umsetzer (1, 2),
- und von dem Umsetzer-Koordinator ein geeigneter Umsetzer (Umsetzer 1) ausgewählt wird.

2. Verfahren nach Patentanspruch 1,
**dadurch gekennzeichnet, dass**
es sich bei dem sendenden und/oder empfangenden Netzelement um ein Endgerät (A,B) handelt.

3. Verfahren nach Patentanspruch 1,
**dadurch gekennzeichnet, dass**
es sich bei dem sendenden und/oder empfangenden Netzelement um ein Applikation handelt.

4. Verfahren nach einem der vorigen Patentansprüche,
**dadurch gekennzeichnet, dass**
eine Mitteilung (Antwort) über den ausgewählten Umsetzer (Umsetzdienst) an dasjendige Netzelement gesendet wird, welches die Anfrage gestellt hatte.

5. Verfahren nach einem der Patentansprüche 1 bis 3,
**dadurch gekennzeichnet, dass**
eine Mitteilung (Antwort) über den ausgewählten Umsetzer (Umsetzdienst) an das sendende, das empfangende Netzelement und den ausgewählten Umsetzdienst gesendet wird.

6. Verfahren nach einem der Patentansprüche 1 bis 3,
**dadurch gekennzeichnet, dass**
die Mitteilung (Antwort) Informationen über das von sendenden und empfangenden Netzelement zu verwendende Austauschformat enthalten soll.

7. Verfahren nach einem der vorhergehenden Patentansprüche,
**dadurch gekennzeichnet, dass**
die Datenübertragung zwischen sendenden und empfangenden Netzelement über den Umsetzer (Umsetzdienst) ohne weitere Aktionen des Umsetzer-Koordinators geschieht.

8. Vorrichtung (zentrale Instanz) zur zentralen Koordinierung der Datenübertragung zwischen einem sendenden Netzelement (Applikation Typ 1,2) und einem empfangenden Netzelement (Endgerät A,B),
- bei der sich mindestens ein Umsetzer (Umsetzdienst) registrieren, und
- der von mindestens einem sendenden oder empfangenden Netzelement eine Anfrage nach einem geeigneten Umsetzer erhält, und
- eine Auswahl trifft zwischen den registrierten Umsetzern.

9. Vorrichtung nach Patentanspruch 8,
**dadurch gekennzeichnet, dass**
die Auswahl des Umsetzers als Antwort an das anfragende Netzelement gesendet wird.

10. Vorrichtung nach Patentanspruch 8,
**dadurch gekennzeichnet, dass** die Auswahl des Umsetzers als Antwort an alle betroffenen Netzelemente gesendet wird.
